# EUROPÄISCHE PATENTSCHRIFT

(11) **EP 1 908 234 B1**
(45) Veröffentlichungstag und Bekanntmachung des Hinweises auf die Patenterteilung: **16.02.2011**
(21) Anmeldenummer: 06791298.0
(22) Anmeldetag: 13.07.2006
(51) Int. Cl.: H04L 12/56, H04L 29/08

(54) **VERFAHREN ZUR STEUERUNG VON RESSOURCEN IN NETZELEMENTEN EINES TELEKOMMUNIKATIONSNETZES**
METHOD FOR CONTROLLING RESOURCES IN NETWORK ELEMENTS OF A TELECOMMUNICATION NETWORK
PROCEDE DE CONTROLE DE RESSOURCES DANS DES ELEMENTS D'UN RESEAU DE TELECOMMUNICATION

(30) Priorität: 25.07.2005 DE 102005035237
(43) Veröffentlichungstag der Anmeldung: 09.04.2008
(73) Patentinhaber: T-Mobile International AG, 53227 Bonn (DE)
(72) Erfinder: ESSELING, Ute, 53229 Bonn (DE); KOPPENBORG, Stefan, 46242 Bottrop (DE); LEHSER, Frank, 53175 Bonn (DE)
(74) Vertreter: Riebling, Peter
(86) Internationale Anmeldenummer: PCT/DE2006/001215
(87) Internationale Veröffentlichungsnummer: WO 2007/012304

(56) Entgegenhaltungen:
- EP-A- 1 154 664
- WO-A-00/10357
- FR-A1- 2 852 178
- US-A1- 2004 109 455
- US-B1- 6 459 682

## Beschreibung

Die Erfindung betrifft Verfahren zur Steuerung von Ressourcen in Netzelementen eines Telekommunikationsnetzes, insbesondere eines Datennetzes, wie dem Internet oder einem mobilen Datennetz, beispielsweise dem General Packet Radio Service (GPRS) in Global System of Mobile Communication (GSM) und Universal Mobile Telecommunication System (UMTS) Netzen. Den derzeitigen Stand der Technik bei der zur Steuerung von Ressourcen in Netzelementen eines GPRS-Datennetzes ist in der Spezifikation des 3GPP Standard z.B. 3GPP TS 23.107, 3GPP 23.060, 3GPP 24.008 beschrieben. Hierbei wird eine quasi-statische Parametrisierung einer logischen Datenverbindung vorgeschlagen, unter der Annahme, dass alle Datenpakete auf dieser Verbindung die gleiche Wichtigkeit besitzen. Dabei entspricht die logische Datenverbindung dem PDP Context. Das quasi-statische Verhalten wird durch die Modifizierung der Parametrisierung möglich, allerdings sind die Triggerpunkte nicht definiert. Mit jedem PDP Context eines GPRS-Datendienstes sind QoS-Parameter (Quality of Service: Dienstgüte) verbunden, die die Übertragungseigenschaft des Datendienstes definierten. Je nach Kommunikationsstandard (z.B. IP oder GSM, UMTS) werden unterschiedliche Parameter zum Festlegen und zum Messen der Dienstgüte (QoS) verwendet. Im GSM- und UMTS-Mobilfunk sind beispielsweise vier QoS-Verkehrsklassen definiert worden:
"Background" für Datentransfer mit möglichst geringer Fehlerrate aber unkritischen Anforderungen an Bandbreite, Delay und Jitter. "Interactive" (IA) für die Nutzung interaktiver Dienste benötigt ähnliche Anforderungen wie bei Background jedoch höhere Anforderungen ans Delay, um Wartezeiten bei der Nutzung der Dienste zu vermeiden.
"Streaming" für Verteildienste. Eine Mindestbandbreite ist erforderlich; Jitter ist in gewissem Rahmen erlaubt, da empfängerseitig Jitterbuffer verwendet werden. Bitfehler sind eher unkritisch.
"Conversational" für direkte Kommunikation (Telefonie, Videotelefonie). Ähnliche Anforderungen wie Streaming, aber die Anforderungen an Delay und Jitter sind deutlich strenger.

Zur Definition dieser Klassen sind beispielsweise in GPRS fünf (Rel97) bzw. 12 (Rel.99) QoS-Parameter mit verschiedenen Charakteristika definiert. Im Folgenden werden einige beispielhaft herausgegriffen:
Verzögerung: Für die Verzögerung von GPRS-Paketen sind mehrere Klassen definiert, die die Übertragungszeitdauer zwischen den GPRS-Zugangspunkten definieren.

Dringlichkeit: Die Dringlichkeit definiert die relative Wichtigkeit, mit der auch bei besonders kritischen Situationen und Bedingungen die Übertragungsparameter eingehalten werden müssen.

Verlässlichkeit: Hier geht es darum, dass die Restfehlerwahrscheinlichkeit eines Datendienstes gewissen Dienstkriterien entspricht.

Spitzendurchsatz: Er definiert die maximale Datenrate, die für einen bestimmten PDP-Context zu erwarten sind, ohne dabei zu garantieren, dass diese Datenrate auch tatsächlich erreicht wird.

Durchschnittsdurchsatz: Hier gilt das Gleiche wie bei den Spitzendurchsatzraten, nur dass es sich hier um zeitlich gemittelte, also Durchschnittsraten, handelt.

In Verbindung mit dem Internet werden bekannte Methoden zur Sicherstellung eines "Quality of Service" (QoS) verwendet, u.a. definiert in ITU-T Recommendation I.380 on IP Performance (ITU-T I.380): Integrated Services (IntServ) und Differentiated Services (DiffServ)

Andere bekannte Implementierungen sind:
- Paket-Inspektion: Untersuchung der Datenpakete für Abrechnungszwecke o.a. (d.h. bislang für andere Funktionen als Qualitäts- und Ressourcensteuerung)
- Abblockung von unerwünschtem Datenverkehr in IP basierten Netzen ("Fire Wall Funktionalität")

Aus den Schriften US 2004/109455 A1, FR 2 852 178 A1, EP 1 154 664 A1 und WO 00/10357 A1 sind Verfahren zur Steuerung von Ressourcen in Netzelementen eines Telekommunikationsnetzes bei der Übertragung von Datenpaketen oder Datenflüssen zwischen dem Telekommunikationsnetz und einem Teilnehmerendgerät bekannt. Aus den Dokumenten ist zu entnehmen, dass in mindestens einem Netzelement zumindest ein eintreffendes Datenpaket inspiziert und gemäß seiner Wichtigkeit in eine Dienstgüteklasse eingestuft wird, und die Einstufung des Datenpakets nach der Wichtigkeit durch eine Signalisierung an andere an der Übertragung beteiligte Netzelemente weitergegeben wird, und die beteiligten Netzelemente anhand dieser Signalisierung eine dynamische Ressourcen-Steuerung der Übertragung vornehmen.

Die Aufgabe der Erfindung besteht darin, die Ressourcensteuerung in einem kapazitätsbegrenzten Telekommunikationsnetz im Vergleich zu den bekannten Verfahren zu verbessern.

Diese Aufgabe wird erfindungsgemäß durch die Merkmale der unabhängigen Patentansprüche gelöst.

Bevorzugte Ausgestaltungen und vorteilhafte Weiterbildungen der Erfindung sind in den abhängigen Ansprüchen angegeben.

Erfindungsgemäß wird durch die erstmalige Kombination der Inspektion von Datenpaketen und den vorhandenen Quality of Service (QoS) Mechanismen von Internet und Mobilfunk (3GPP) eine bessere Ressourcenverteilung erzielt. Damit wird erstmalig eine bislang nicht mögliche Ende-zu-Ende Bereitstellung von QoS über Netz- und Technologiegrenzen erreicht.

Der Kern der Erfindung liegt in einer Nutzung einer Datenpaket-Inspektion für die QoS Steuerung in Telekommunikationsnetzen. Bisher wird eine Paket-Inspektion in Telekommunikationsnetzen nur für Abrechnungszwecke genutzt. Mit dem erfindungsgemäßen Einsatz der Paket-Inspektion ist erstmals eine dynamische Berücksichtigung von Diensten und Kunden-Klassen für die Qualitäts- und Ressourcensteuerung möglich.

Gemäß einer bevorzugten Ausgestaltung der Erfindung kann außerdem eine Verlagerung der gesamten Steuerungskontrolle zum Netzbetreiber erfolgen. Die Ressourcensteuerungsprozeduren in Mobilfunknetzen sind auf Datenflüsse optimiert und geben einen großen Teil der Steuerung an die Mobilstationen, wodurch Missbrauchpotential gegeben ist. Mit der Einführung der Ressourcensteuerung basierend auf dem Ergebnis der Paket-Inspektion kann die Kontrolle komplett ins Netz verlagert werden. Dadurch kann zum einen der mögliche Missbrauch verhindert und zum anderen dem Netzbetreiber die Möglichkeit gegeben werden z. B. über Parameter-Einstellungen die Kriterien für die Ressourcensteuerung zu definieren.

Eine weitere Ausgestaltung der Erfindung sieht eine Verbesserung der Latenzzeiten vor. Dies betrifft eine Verbesserung der Reaktionszeiten für die Ressourcenanpassung bei den Teillösungen, die auf Paketbasis entscheiden, da hier z. B. Signalisierungs- und Umkonfigurationszeiten entfallen. Diese Verbesserung wirkt sich insbesondere auch für den Kommunikationskunden positiv aus, da sich Latenzzeiten für priorisierte Dienste oder bevorzugte Kunden-Klassen verringern.

Basierend auf Informationen, die aus den Datenpaketen gewonnen werden, werden in den Netzelementen eines (Mobilfunk-) Netzes Ressourcen entsprechend der Bedeutung des jeweiligen Datenpakets zur Verfügung gestellt.

Ein Netzelement inspiziert und klassifiziert die Datenpakete gemäß der Wichtigkeit z. B. des Services und/oder des Nutzers. Die Einstufung in Bezug auf die Wichtigkeit des Datenpakets wird durch eine geeignete Signalisierung an andere beteiligte Netzelemente weitergegeben. Die beteiligten Netzelemente berücksichtigen diese Signalisierung derart, dass eine dynamische Ressourcen-Steuerung erreicht wird.

Die Regeln zur Einstufung eines Datenpaketes oder Datenflusses nach seiner Wichtigkeit sind in den Netzelementen gespeichert, die für die Inspizierung zuständig sind. Die einem Datenpaket oder einem Datenfluss zugeordnete Wichtigkeit wird per Signalisierung zwischen den beteiligten Netzelementen übertragen. Die Regeln zur Umsetzung der signalisierten Bedeutung eines Datenpakets oder eines Datenflusses in den beteiligten Netzelementen sind in diesen abgelegt. Das Regelwerk bezüglich der Inspektion, Signalisierung und Umsetzung kann Netzbetreiber-spezifisch administriert werden.

Mit dieser neuen Lösung für die Verbesserung der Ressourcen-Steuerung wird erstmals das Ergebnis der Paket-Inspektion eingesetzt, wobei die Steuerung stattfinden kann über:
a) die Eigenschaften einer Paket-Verbindung (PDP Context) mit dem Vorteil, dass der Netzbetreiber die vollständige Kontrolle über Strategie der Ressourcensteuerung erhält und damit zusätzlich Missbrauch durch den Nutzer verhindert werden kann.
b) die Kennzeichnung einzelner Datenpakete innerhalb einer Paket-Verbindung mit dem Vorteil, dass eine zwangsläufige Änderung der Verbindungsparameter für den gesamten Datenfluss nicht notwendig ist. Dabei entsteht die Kennzeichnung aus einer Klassifizierung, die:
   1) in einem Netzelement an der Netzgrenze stattfinden und über die Kennzeichnung an weitere beteiligte Netzelemente signalisiert wird.
   2) eigenständig in einzelnen/in jedem Netzelement stattfinden. Die Kennzeichnung ist hier implementierungsabhängig.
c) über eine Kombination aus den vorgenannten Varianten mit dem Vorteil einer hochdynamische Anpassung von relativen Prioritäten über die Datenpaket-Kennzeichnung und einer zusätzlichen Anpassung der logischen Verbindung bei absoluten Parameteränderungen.

Nachfolgend werden bevorzugte Ausführungsbeispiele der Erfindung anhand der Zeichnungen beschrieben. Dabei zeigt:
- Figur 1:: den grundsätzlichen Signalisierungsfluss für den Aufbau einer logischen Verbindung (GPRS: PDP-Context);
- Figur 2:: Prinzipieller Ablauf für Lösung eines ersten Ausführungsbeispiels der Erfindung (Lösung a);
- Figur 3:: Signalisierung zu Lösung a);
- Figur 4:: Prinzipieller Ablauf eines zweiten Ausführungsbeispiels der Erfindung (Lösung b1);
- Figur 5:: Signalisierung zu Lösung b1;
- Figur 6:: Prinzipieller Ablauf eines dritten Ausführungsbeispiels der Erfindung (Lösung b2);
- Figur 7:: Signalisierung zu Lösung b2.

In den folgenden beispielhaften Zeichnungsfiguren wird die zu steuernde Ressource durch unterschiedlich breite Balken dargestellt. Die dargestellte Ressource steigert sich proportional zur Breite des Balkens hinsichtlich Datendurchsatz und Delay-Verhalten.

### Realisierungsbeispiel für Lösung a):

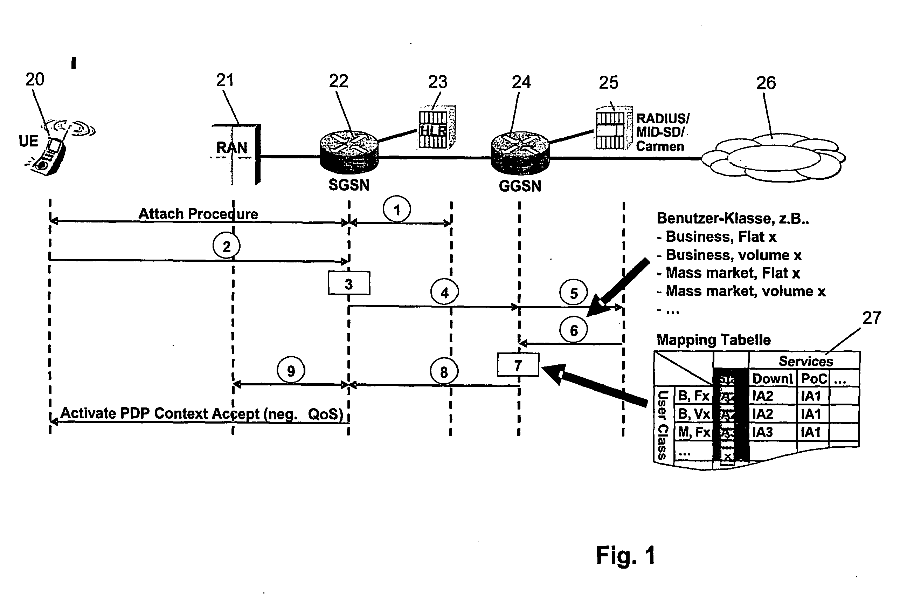

Vor dem Start einer Datenübertragung initiiert die Mobilstation den Aufbau einer logischen Verbindung mit dem Datennetz (PDP Context). Die verwendete Prozedur und das Verhalten der Netzelemente bis zur Abfrage des Netzübergangsknotens (GGSN) entspricht dem 3GPP Standard, siehe Figur 1, Schritte 2-4. In Schritt 1, Figur 1, werden vom Vermittlungsknoten (SGSN) Teilnehmerdaten vom Heimatregister, HLR, 23 abgefragt und gespeichert. In Schritt 2, Figur 1, wird ein PDP Context Anfrage für ein angefordertes QoS Profil aktiviert (req. QoS, hauptsächlich für "gebuchte" Dienste). In Schritt 3, Figur 1, wird vom SGSN das erlaubte QoS-Profil des Teilnehmers ermittelt, wobei das erlaubte QoS-Profil wie folgt definiert ist: allowed QoS= Min (angeforderte QoS, subscribierte QoS). In Schritt 4, Figur 1, wird nun ein entsprechender PDP Context Request generiert.

Nachfolgend fragt der Netzübergangsknoten GGSN 24 in den Schritten 5 und 6, Figur 1, Authentifizierungsdaten und Kundendaten, u.a. die Kunden-Klasse, aus Abrechnungs- und weiteren Datenbanksystemen 25, beispielsweise RADIUS, MID-SD, ab. In Schritt 7, Figur 1, ermittelt der GGSN 24 anhand der Kunden-Klasse aus einer vom Netzbetreiber konfigurierbaren Tabelle 27 die abgelegte Startkonfiguration der Qualitätsparameter für diesen Kunden. Anschließend übermittelt der GGSN 24 die neu bestimmten Qualitätsparameter zurück an den Vermittlungsknoten SGSN 22 (Schritt 8, Figur 1), der daraufhin diese Qualitätsparameter mit dem Funksystem, RAN, 21 verhandelt (Schritt 9, Figur 1). Während dieses Verhandlungsabschnitts baut das RAN 21 eine logische Teilverbindung des PDP Context, einen Radio Access Bearer (RAB), zur Mobilstation 20 auf. Das Ergebnis der Verhandlung zwischen RAN 21 und SGSN 22 stellt die endgültig verhandelten Qualitätsparameter (QoS-Klasse) für die logische Verbindung (PDP Context) dar, die der SGSN 22 der Mobilstation 20 mitteilt. Jetzt ist der eigentliche Datentransfer zwischen Mobilstation 20 und einem Server möglich. Es wird im nachfolgenden Beispiel davon ausgegangen, dass für den Datentransfer eine QoS-Klasse "Interactive" mit Priorität "3", kurz "IA3" verhandelt wurde.

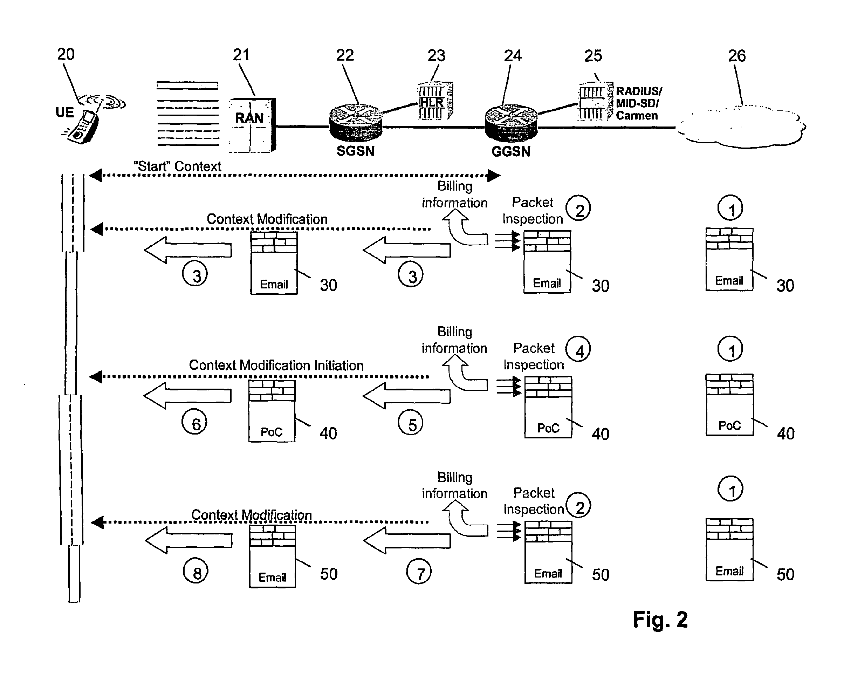

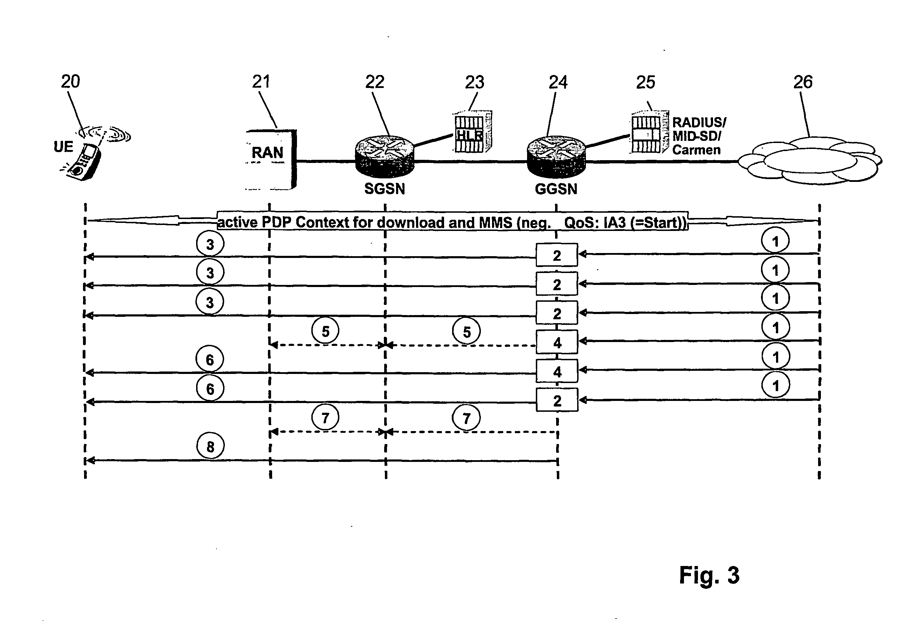

Die Erfindung sieht nun vor, dass der Netzübergangsknoten GGSN 24 die Datenpakete während der Datenübertragung inspiziert und mögliche Kriterien für eine notwendige Anpassung der Qualitätsparameter der logischen Verbindung überprüft. Der Ablauf dieser Prozedur ist in den Figuren 2 und 3 dargestellt.

Ein Datenpaket der QoS-Klasse "IA3", beispielsweise ein Email Datenpaket 30, soll dem Teilnehmerendgerät 20 eines GPRS-Datennetzes (21-25) zugestellt werden. Das Datenpaket 30 erreicht einen Netzübergangsknoten GGSN 24 des Datennetzes (Schritt 1, Figs. 2 u. 3). Im GGSN 24 findet eine Inspektion des Datenpaketes 30, insbesondere des Paketheaders statt (Schritt 2, Figs. 2 u. 3). Es wird festgestellt, dass das Datenpaket 30 der verhandelten QoS-Klasse "IA3" entspricht. Es ist keine Anpassung der Qualitätsparameter notwendig. Gemäß Schritt 3, kann das Datenpaket dem Empfänger 20 zugestellt werden (Schritt 3, Figs. 2 u. 3). Eine Anpassung ist erfindungsgemäß notwendig, wenn die Einstufung des Datenpakets für den ermittelten Dienst und für die Kunden-Klasse gemäß einer vom Netzbetreiber konfigurierbaren Tabelle einen Unterschied zwischen ermittelten und tatsächlich eingestellten Qualitätsparameter (3GPP QoS Parameter) für die logische Verbindung ergibt.

Ferner soll ein Datenpaket der QoS-Klasse "IA1", beispielsweise ein PoC Datenpaket 40, dem Teilnehmerendgerät 20 zugestellt werden. Das Datenpaket 40 erreicht einen Netzübergangsknoten GGSN 24 des Datennetzes (Schritt 1, Figs. 2 u. 3). Im GGSN 24 findet eine Inspektion des Datenpaketes 40, insbesondere des Paketheaders statt. Es wird festgestellt, dass das Datenpaket 40 nicht der zuvor verhandelten QoS-Klasse "IA3" entspricht (Schritt 4, Figs. 2 u. 3). Es ist erfindungsgemäß eine Anpassung der QoS-Klasse notwendig, da die Einstufung des Datenpakets für den ermittelten Dienst und für die Kunden-Klasse von der verhandelten QoS-Klasse abweicht. Eine notwendige Umkonfigurierung der Qualitätsparameter der logischen Verbindung wird mit allen beteiligten Netzelementen, beispielsweise dem Vermittlungsknoten SGSN 22 und dem Funksystem RAN 21, neu verhandelt. Diese Verhandlung beinhaltet auch die Anpassung des RAB zwischen RAN 21 und Endgerät 20 über eine RAB MODIFICATION (Schritt 5, Figs. 2 u. 3). Bei erfolgreichem Abschluss der Verhandlung wird das RAN 21 die neuen Parameter für die laufende Datenverbindung bei der Ressourcenvergabe berücksichtigen. Das Endgerät 20 wird durch eine PDP CONTEXT MODIFICATION über die Änderung informiert. Die Anpassung der Qualitätsparameter für die logische Verbindung findet parallel zur weiteren Datenübertragung statt (Schritt 6, Figs. 2 u. 3).

Schließlich soll wieder ein Datenpaket der QoS-Klasse "IA3", beispielsweise ein Email Datenpaket 50, dem Teilnehmerendgerät 20 zugestellt werden.

Das Datenpaket 50 erreicht einen Netzübergangsknoten GGSN 24 des Datennetzes (Schritt 1, Figs. 2 u. 3). Im GGSN 24 findet eine Inspektion des Datenpaketes 50, insbesondere des Paketheaders statt. Es wird festgestellt, dass das Datenpaket 50 der QoS-Klasse "IA3" entspricht (Schritt 2, Figs. 2 u. 3). Es ist wiederum eine Anpassung der QoS-Klasse von "IA1" auf "IA3" notwendig, da die Einstufung des Datenpakets 50 für den ermittelten Dienst und für die Kunden-Klasse von der bisherigen QoS-Klasse abweicht. Eine notwendige Umkonfigurierung der Qualitätsparameter der logischen Verbindung wird mit allen beteiligten Netzelementen, beispielsweise dem Vermittlungsknoten SGSN 22 und dem Funksystem RAN 21, neu verhandelt. Diese Verhandlung beinhaltet auch die Anpassung des RAB zwischen RAN 21 und Endgerät 20 über eine RAB MODIFICATION (Schritt 7, Figs. 2 u. 3). Bei erfolgreichem Abschluss der Verhandlung wird das RAN 21 die neuen Parameter für die laufende Datenverbindung bei der Ressourcenvergabe berücksichtigen. Das Endgerät 20 wird durch eine PDP CONTEXT MODIFICATION über die Änderung informiert. Die Anpassung der Qualitätsparameter für die logische Verbindung findet parallel zur weiteren Datenübertragung statt (Schritt 8, Figs. 2 u. 3).

Um Schwingungsvorgänge zu vermeiden, wird ein Hysterese Mechanismus verwendet, damit erst eine Änderung der Qualitätsparameter vorgenommen wird, wenn eine stabile Einschätzung des ermittelnden Dienstes bzw. QoS-Klasse vorliegt.

### Realisierungsbeispiel für Lösung b1

Vor dem Start einer Datenübertragung initiiert die Mobilstation den Aufbau einer logischen Verbindung mit dem Datennetz (PDP Context). Die verwendete Prozedur und das Verhalten der Netzelemente bis zur Abfrage des Netzübergangsknotens (GGSN) entspricht dem 3GPP Standard, siehe auch Figur 1, Schritt 2-4 und zugehörige Beschreibung.

Gemäß der Erfindung fragt der Netzübergangsknoten GGSN 24 in den Schritten 5 und 6, Figur 1, Authentifikationsdaten und Kundendaten, u.a. die Kunden-Klasse, aus Abrechnungs- und weiteren Datenbanksystemen 25, beispielsweise RADIUS, MID-SD, ab. In Schritt 7, Figur 1, ermittelt der GGSN 24 anhand der Kunden-Klasse aus einer vom Netzbetreiber konfigurierbaren Tabelle 27 die abgelegte Startkonfiguration der Qualitätsparameter für diesen Kunden. Anschließend übermittelt der GGSN 24 die neu bestimmten Qualitätsparameter zurück an den Vermittlungsknoten SGSN 22 (Schritt 8, Figur 1), der daraufhin diese Qualitätsparameter mit dem Funksystem RAN 21 verhandelt (Schritt 9, Figur 1). Während dieses Verhandlungsabschnitts baut das RAN 21 eine logische Teilverbindung des PDP Context, einen Radio Access Bearer (RAB), zur Mobilstation 20 auf. Das Ergebnis der Verhandlung zwischen RAN 21 und SGSN 22 stellt die endgültig verhandelten Qualitätsparameter für die logische Verbindung dar, die der SGSN 22 der Mobilstation 20 mitteilt. Jetzt ist der eigentliche Datentransfer zwischen Mobilstation 20 und Server möglich. Es wird im nachfolgenden Beispiel davon ausgegangen, dass für den Datentransfer eine QoS-Klasse "Interactive" mit Priorität "3", kurz "IA3" verhandelt wurde.

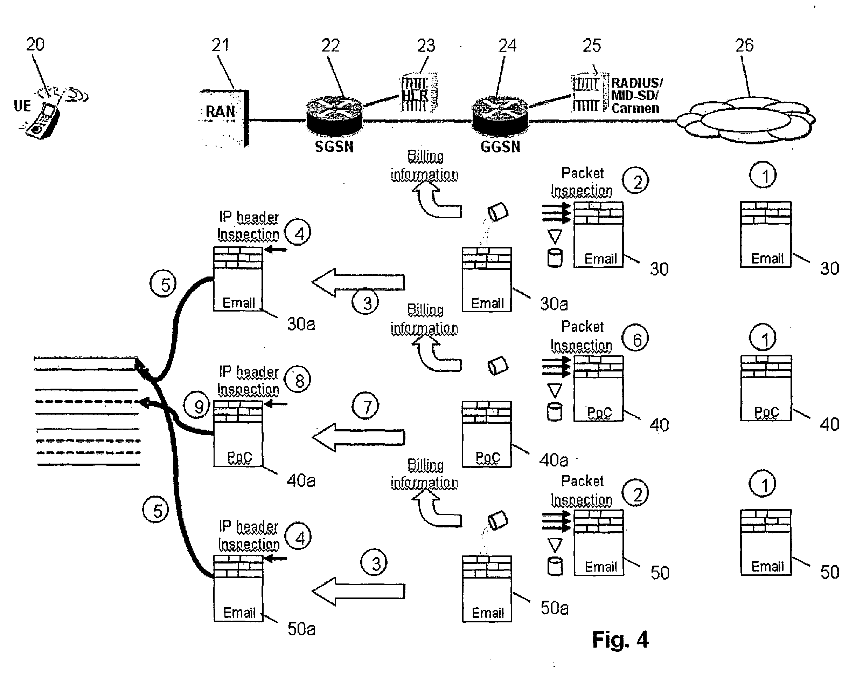

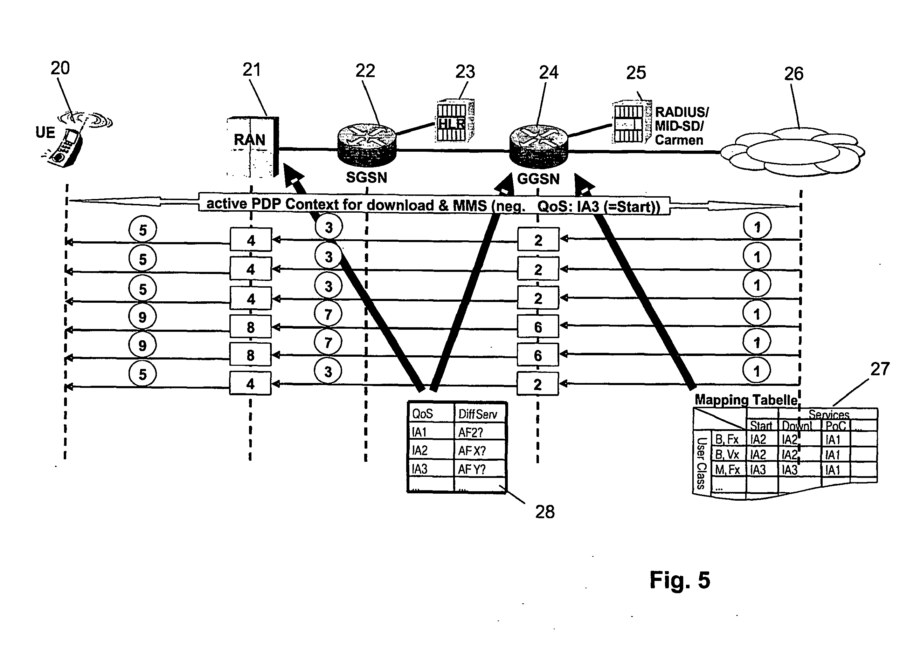

Während der Datenübertragung inspiziert der Netzübergangsknoten GGSN 24 die eintreffenden Datenpakete und ermittelt die für das jeweilige Datenpaket zu verwendenden Qualitätsparameter (IP Priorität) gemäß einer vom Netzbetreiber konfigurierbaren Tabelle 27 abhängig von dem ermittelten Dienst und der Kunden-Klasse. Der Ablauf dieser Prozedur ist in den Figuren 4 und 5 dargestellt.

Ein Datenpaket der QoS-Klasse "IA3", beispielsweise ein Email Datenpaket 30, soll einem Teilnehmerendgerät 20 eines GPRS-Datennetzes zugestellt werden. Das Datenpaket 30 erreicht einen Netzübergangsknoten GGSN 25 des Datennetzes (Schritt 1, Figs. 4 u. 5). Im GGSN 24 findet eine Inspektion des Datenpaketes 30, insbesondere des Paketheaders statt (Schritt 2, Figs. 4 u. 5). Es wird festgestellt, dass das Datenpaket 30 der QoS-Klasse "IA3" entspricht. Erfindungsgemäß überschreibt nun der GGSN 24 z. B. das IP TOS Feld des entsprechenden Datenpakets 30 mit den ermittelten Qualitätsparametern "IA3" (IP Priorität) und leitet das veränderte Datenpaket 30a an einen zuständigen Vermittlungsknoten SGSN 22 weiter (Schritt 3, Figs. 4 u. 5).

Alle weiteren Netzelemente, z. B. der Vermittlungsknoten SGSN 22 und insbesondere auch die Ressourcensteuerung im Funksystem RAN 21, werten die vom GGSN 24 eingeschriebenen Qualitätsparameter aus und nutzen diese Information für die Steuerung des Datenpakets 30a (Schritt 4, Figs. 4 u. 5). Die Steuerung betrifft die Priorisierung der verschiedenen Pakete für eine Mobilstation 20 sowie die Priorisierung von Paketen für verschiedene Mobilstationen. Das Datenpaket 30a wird dem Endgerät 20 entsprechend seiner QoS-Klasse zugestellt (Schritt 5, Figs. 4 u. 5).

Ein nachfolgendes Datenpaket der QoS-Klasse "IA1", beispielsweise ein PoC Datenpaket 40, soll dem Teilnehmerendgerät 20 zugestellt werden. Das Datenpaket 40 erreicht einen Netzübergangsknoten GGSN 24 des Datennetzes (Schritt 1, Figs. 4 u. 5). Im GGSN 24 findet eine Inspektion des Datenpaketes 40, insbesondere des Paketheaders statt (Schritt 6, Figs. 4 u. 5).

Es wird festgestellt, dass das Datenpaket 40 der QoS-Klasse "IA1" entspricht. Erfindungsgemäß überschreibt nun der Netzübergangsknoten GGSN 24 z. B. das IP TOS Feld des entsprechenden Datenpakets 40 mit den ermittelten Qualitätsparametern "IA1" (IP Priorität) und leitet das veränderte Datenpaket 40a an einen zuständigen Vermittlungsknoten SGSN 22 weiter (Schritt 7, Figs. 4 u. 5).

Alle weiteren Netzelemente, z. B. der Vermittlungsknoten SGSN 22 und insbesondere auch die Ressourcensteuerung im Funksystem RAN 21, werten die vom GGSN 24 eingeschriebenen Qualitätsparameter aus und nutzen diese Information für die Steuerung des Datenpakets 30a (Schritt 8, Figs. 4 u. 5). Die Steuerung betrifft die Priorisierung der verschiedenen Pakete für eine Mobilstation 20 sowie die Priorisierung von Paketen für verschiedene Mobilstationen. Das Datenpaket 40a wird dem Endgerät 20 entsprechend seiner QoS-Klasse zugestellt (Schritt 9, Figs. 4 u. 5).

Die Behandlung des Datenpakets 50 bzw. des veränderten Datenpakets 50a erfolgt entsprechend der Datenpakete 30 bzw. 30a.

Das Realisierungsbeispiel bezieht sich auf die Richtung von Netz zum Endgerät, jedoch ist auch die Gegenrichtung, d.h. vom Endgerät zum Netz, möglich.

### Realisierungsbeispiel für eine Kombination aus Lösung a) und_Lösung b1)

Der einzelnen Schritte dieses Realisierungsbeispiels können der Beschreibung der Lösungen a) und b1) entnommen werden.

Vor dem Start einer Datenübertragung initiiert die Mobilstation den Aufbau einer logischen Verbindung mit dem Datennetz (PDP Context). Die verwendete Prozedur und das Verhalten der Netzelemente bis zur Abfrage des Netzübergangsknotens (GGSN) entspricht dem 3GPP Standard, siehe auch Figur 1, Schritte 2-4.

Gemäß der Erfindung fragt der Netzübergangsknoten GGSN 24 in den Schritten 5 und 6, Figur1, Authentifikationsdaten und Kundendaten, u.a. die Kunden-Klasse, aus Abrechnungs- und weiteren Datenbanksystemen 25, beispielsweise RADIUS, MID-SD, ab. In Schritt 7, Figur1, ermittelt der GGSN 24 anhand der Kunden-Klasse aus einer vom Netzbetreiber konfigurierbaren Tabelle 27 die abgelegte Startkonfiguration der Qualitätsparameter für diesen Kunden. Anschließend übermittelt der GGSN 24 die neu bestimmten Qualitätsparameter zurück an den Vermittlungsknoten SGSN 22 (Schritt 8, Figur1), der daraufhin diese Qualitätsparameter mit dem Funksystem RAN 21 verhandelt (Schritt 9, Figur 1). Während dieses Verhandlungsabschnitts baut das RAN 21 eine logische Teilverbindung des PDP Context, einen Radio Access Bearer (RAB), zur Mobilstation 20 auf. Das Ergebnis der Verhandlung zwischen RAN 21 und SGSN 22 stellt die endgültig verhandelten Qualitätsparameter für die logische Verbindung dar, die der SGSN 22 der Mobilstation 20 mitteilt. Jetzt ist der eigentliche Datentransfer zwischen Mobilstation 20 und Server möglich. Es wird im nachfolgenden Beispiel davon ausgegangen, dass für den Datentransfer eine QoS-Klasse "Interactive" mit Priorität "3", kurz "IA3" verhandelt wurde.

Während der Datenübertragung inspiziert der Netzübergangsknoten GGSN 24 die Datenpakete 30, 40, 50 und überprüft mögliche Kriterien für eine Datenfluss-Bestimmung. Mit dem Ergebnis der Überprüfung bestimmt der GGSN 24 aus einer vom Netzbetreiber konfigurierbaren Tabelle 27 die für den ermittelten Dienst und für den Kunden zu nutzenden Qualitätsparameter für das Datenpaket. Gemäß Lösung b1) überschreibt der GGSN 24 das IP TOS Feld des Datenpakets mit den ermittelten QoS Parametern (IP Priorität) und leitet das veränderte Datenpaket 30a, 40a bzw. 50a weiter. Alle weiteren Netzelemente, wie der zuständige Vermittlungsknoten SGSN 22 und insbesondere die Ressourcensteuerung im Funksystem RAN 12, werten die Qualitätsparameter aus und nutzen diese Information für die Steuerung der Pakete. Die Steuerung betrifft die Priorisierung der verschiedenen Pakete für eine Mobilstation sowie die Priorisierung von Paketen für verschiedene Mobilstationen.

Der Ablauf dieser Prozedur ist in den Figuren 4 und 5 dargestellt.

Zusätzlich wird bei jedem Datenpaket überprüft, ob auch eine Änderung der Qualitätsparameter für die logische Verbindung, gemäß Lösung a) notwendig wird (s. auch Figuren 2 und 3). Dies erfolgt in einer Weise, dass die Änderung der Qualitätsparameter für die logische Verbindung nur dann stattfindet, wenn zwingend notwendig, d.h. wenn absolute Qualitätsparameter, z. B. garantierte Durchsatzraten, geändert werden. Ein Hysterese-Mechanismus ist zu berücksichtigen, um Schwingungsvorgänge zu vermeiden. Die Anpassung der Qualitätsparameter für die logische Verbindung findet parallel zur weiteren Datenübertragung statt.

### Realisierungsbeispiel für Lösung b2

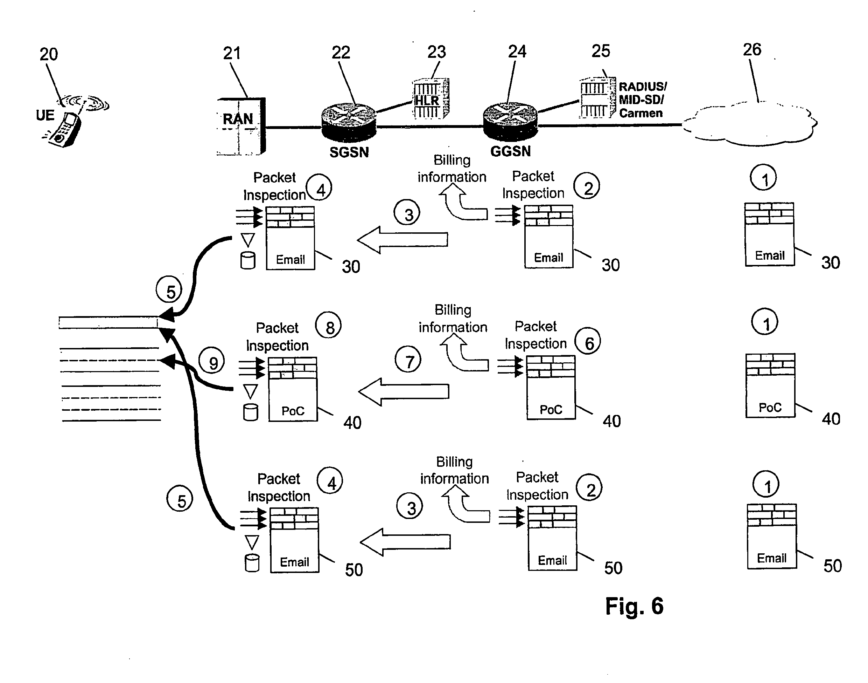

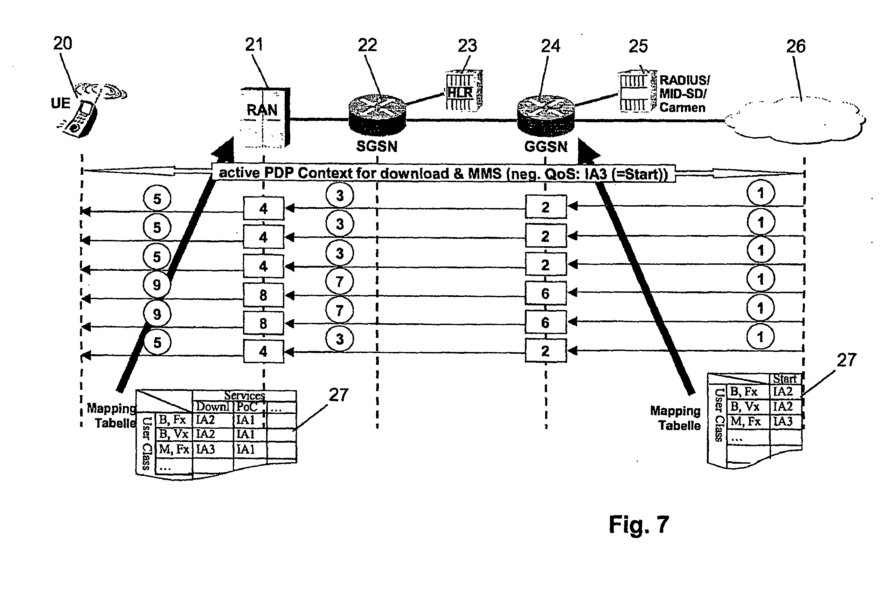

Die Lösung b2) gemäß den Figuren 6 und 7 entspricht grundsätzlich der Lösung b1) gemäß den Figuren 4 und 5.

Es erfolgt eine Kennzeichnung einzelner Datenpakete innerhalb einer Paket-Verbindung mit dem Vorteil dass eine zwangsläufige Änderung der Verbindungsparameter für den gesamten Datenfluss nicht notwendig ist. Dabei entsteht die Kennzeichnung aus einer Klassifizierung, die eigenständig in einzelnen bzw. in jedem Netzelement stattfinden. Die Kennzeichnung ist hier implementierungsabhängig. Ein Überschreiben der IP TOS Felder der Datenpakete findet nicht statt.

**Liste der Bezugszeichen und Abkürzungen**
- 1-9: Verfahrensschritte (individuell für jede Zeichnungsfigur)

- 20: Endgerät (UE)
- 21: Funksystem (RAN)
- 22: Vermittlungsknoten (SGSN)
- 23: Heimatregister (HLR)
- 24: Übergangsknoten (GGSN)
- 25: Datenbanksystem (RADIUS, MID-SD)
- 26: IP-Netz
- 27: Tabelle
- 28: Tabelle

- 30: Datenpaket (z. B. Email)
- 40: Datenpaket (z. B. PoC)
- 50: Datenpaket (z. B. Email)

- UE: User Equipment
- RAN: Radio Access Network
- RAB: Radio Access Bearer (Funkschnittstelle)
- SGSN: Serving GPRS Support Node
- HLR: Home Location Register
- GGSN: Gateway GPRS Support Node
- RADIUS: Remote Authentication Dial-In User Service
- PoC: Push-to-talk over Cellular

## Patentansprüche

1. Verfahren zur Steuerung von Ressourcen in Netzelementen (21, 22, 24) eines Telekommunikationsnetzes (26) bei der Übertragung von Datenpaketen (30, 40, 50) oder Datenflüssen zwischen dem Telekommunikationsnetz und einem Teilnehmerendgerät (20) und umgekehrt, wobei in mindestens einem Netzelement (21, 22, 24) jedes eintreffende Datenpaket (30, 40, 50) inspiziert und gemäß seiner Wichtigkeit in eine Dienstgüteklasse eingestuft wird, und die Einstufung des Datenpakets nach der Wichtigkeit durch eine Signalisierung an andere an der Übertragung beteiligte Netzelemente weitergegeben wird, und die beteiligten Netzelemente anhand dieser Signalisierung eine dynamische Ressourcen-Steuerung der Übertragung vornehmen,
**dadurch gekennzeichnet, dass** die Steuerung der Ressourcen stattfindet über die Eigenschaften einer logischen Paket-Verbindung, einem sogenannten PDP Context, und über die Kennzeichnung einzelner Datenpakete innerhalb dieser Paket-Verbindung, wobei eine dynamische Anpassung von relativen Prioritäten über die Datenpaket-Kennzeichnung erfolgt und bei jedem Datenpaket überprüft wird, ob zusätzlich eine Anpassung der Qualitätsparameter für die logische Verbindung notwendig wird, wobei diese Anpassung nur dann erfolgt, wenn absolute Qualitätsparameter für die Verbindung geändert werden.

2. Verfahren nach Anspruch 1, **dadurch gekennzeichnet, dass** Regeln zur Einstufung eines Datenpaketes oder Datenflusses nach seiner Wichtigkeit in einem Regelwerk (27) in dem Netzelement gespeichert sind, das für die Inspizierung zuständig ist.

3. Verfahren nach Anspruch 1 oder 2, **dadurch gekennzeichnet, dass** Regeln zur Umsetzung der signalisierten Wichtigkeit eines Datenpakets oder eines Datenflusses in den beteiligten Netzelementen in einem Regelwerk (28) abgelegt sind.

4. Verfahren nach einem der Ansprüche 2 oder 3, **dadurch gekennzeichnet, dass** das Regelwerk (27; 28) bezüglich der Inspektion, der Signalisierung und der Umsetzung von einem Netzbetreiber administrierbar ist.

5. Verfahren nach Anspruch 1, **dadurch gekennzeichnet, dass** die Kennzeichnung durch eine Klassifizierung definiert ist, die in einem Netzelement durchgeführt wird und über eine Kennzeichnung an weitere beteiligte Netzelemente signalisiert wird.

6. Verfahren nach Anspruch 1, **dadurch gekennzeichnet, dass** die Kennzeichnung durch eine Klassifizierung definiert ist, die eigenständig in einzelnen oder in jedem beteiligten Netzelement stattfindet.

7. Verfahren nach einem der Ansprüche 1 bis 6, **dadurch gekennzeichnet, dass** bei der Inspektion des Datenpaketes dessen Dienstgüteklasse, QoS-Klasse, bestimmt wird, und auf Basis der ermittelten Dienstgüteklasse eine Anpassung der logische Verbindung zwischen einem Funksystem und dem Teilnehmerendgerät an die Dienstgüteklasse vorgenommen wird.

8. Verfahren nach einem der Ansprüche 1 bis 6, **dadurch gekennzeichnet, dass** bei der Inspektion des Datenpaketes dessen Dienstgüteklasse, QoS-Klasse, bestimmt wird, dass der Dateiheader des Datenpakets mit der ermittelten Dienstgüteklasse überschrieben wird, und dass in den beteiligten Netzelementen die eingeschriebene Dienstgüteklasse ausgewertet und für die Steuerung des Datenpakets verwendet wird.

9. Verfahren nach einem der Ansprüche 1 bis 6, **dadurch gekennzeichnet, dass** in jedem beteiligten Netzelement die Dienstgüteklasse, QoS-Klasse, des Datenpaketes bestimmt wird, und jedes Netzelement die ermittelte Dienstgüteklasse für die Steuerung des Datenpaketes bei der Weiterleitung an ein anderes Netzelement verwendet.

10. Telekommunikationssystem mit verbesserter Steuerung von Ressourcen in Netzelementen (21, 22, 24) bei der Übertragung von Datenpaketen (30, 40, 50) oder Datenflüssen zwischen den Netzelementen und einem Teilnehmerendgerät (20) und umgekehrt, mit
in mindestens einem Netzelement (21, 22, 24) vorhandene Inspektionsmittel zur Inspektion jedes eintreffenden Datenpaketes (30, 40, 50) und zur Einstufung des Datenpaketes gemäß seiner Wichtigkeit in eine Dienstgüteklasse, und Mittel zur Signalisierung der Einstufung des Datenpakets nach der Wichtigkeit an andere an der Übertragung beteiligte Netzelemente, und Mittel in den beteiligten Netzelementen, um anhand dieser Signalisierung eine dynamische Ressourcen-Steuerung der Übertragung vorzunehmen, **dadurch gekennzeichnet, dass** die Mittel in den beteiligten Netzelementen derart ausgestaltet sind, dass die Steuerung der Ressourcen stattfindet über die Eigenschaften einer logischen Paket-Verbindung, einem sogenannten PDP Context, und über die Kennzeichnung einzelner Datenpakete innerhalb dieser Paket-Verbindung, wobei eine dynamische Anpassung von relativen Prioritäten über die Datenpaket-Kennzeichnung erfolgt und bei jedem Datenpaket überprüft wird, ob zusätzlich eine Anpassung der Qualitätsparameter für die logische Verbindung notwendig wird, wobei diese Anpassung nur dann erfolgt, wenn absolute Qualitästsparameter für die Verbindung geändert werden.

## Claims

1. Method for the control of resources in network elements (21, 22, 24) of a telecommunications network (26) in the transmission of data packets (30, 40, 50) or data streams between the telecommunications network and a subscriber terminal (20) and vice versa, wherein in at least one network element (21, 22, 24) each incoming data packet (30, 40, 50) is inspected and classified according to its importance in a quality of service category, and the classification of the data packet according to importance is forwarded by signalling to other network elements involved in transmission, and the network elements involved performed dynamic resource control of transmission with the aid of this signalling, **characterised in that** control of the resources takes place via the properties of a logical packet connection, a so-called PDP context, and via the labelling of individual data packets within this packet connection, wherein dynamic adaptation of relative priorities is effected via the data packet labelling and for each data packet it is checked whether in addition adaptation of the quality parameters is necessary for the logical connection, wherein this adaptation is effected only if absolute quality parameters are altered for the connection.

2. Method according to claim 1, **characterised in that** rules for the classification of a data packet or data stream according to its importance are stored in a system of rules (27) in the network element, which is responsible for the inspection.

3. Method according to claim 1 or 2, **characterised in that** rules for transcribing the signalled importance of a data packet or data stream are filed in the network elements involved in a system of rules (28).

4. Method according to one of claims 2 or 3, **characterised in that** the system of rules (27; 28) can be administered by a network operator with respect to the inspection, signalling and transcription.

5. Method according to claim 1, **characterised in that** the labelling is defined by a classification which is carried out in a network element and signalled to further network elements involved via labelling.

6. Method according to claim 1, **characterised in that** the labelling is defined by a classification which takes place independently in individual network elements or in each network element involved.

7. Method according to one of claims 1 to 6, **characterised in that** during inspection of the data packet its quality of service (QoS) category is determined, and on the basis of the quality of service category determined, adaptation of the logical connection between a radio system and the subscriber terminal to the quality of service category is carried out.

8. Method according to one of claims 1 to 6, **characterised in that** during inspection of the data packet its quality of service (QoS) category is determined, **in that** the file header of the data packet is overwritten with the quality of service category determined, and **in that** in the network elements involved the quality of service category recorded is evaluated and used for control of the data packet.

9. Method according to one of claims 1 to 6, **characterised in that** in each network element involved the quality of service (QoS) category of the data packet is determined, and each network element uses the quality of service category determined for control of the data packet during forwarding to another network element.

10. Telecommunications system with improved control of resources in network elements (21, 22, 24) during the transmission of data packets (30, 40, 50) or data streams between the network elements and a subscriber terminal (20) and vice versa, having inspection means existing in at least one network element (21, 22, 24) for the inspection of each incoming data packet (30, 40, 50) and for classification of the data packet according to its importance in a quality of service category, and means for signalling the classification of the data packet according to importance to other network elements involved in the transmission, and means in the network elements involved for carrying out dynamic resource control of transmission with the aid of this signalling, **characterised in that** the means in the network elements involved are designed in such a way that control of resources takes place via the properties of a logical packet connection, a so-called PDP context, and via the labelling of individual data packets within this packet connection, wherein dynamic adaptation of relative priorities is effected via the data packet labelling and for each data packet it is checked whether in addition adaptation of the quality parameters is necessary for the logical connection, wherein this adaptation is effected only if absolute quality parameters are altered for the connection.

## Revendications

1. Procédé pour commander des ressources dans des éléments de réseau (21, 22, 24) d'un réseau de télécommunication (26) lors de la transmission de paquets de données (30, 40, 50) ou de flux de données entre le réseau de télécommunication et un terminal d'abonné (20) et inversement, étant précisé que dans au moins un élément de réseau (21, 22, 24), chaque paquet de données (30, 40, 50) entrant est inspecté et est classé selon son importance dans une catégorie de qualité de service, que le classement du paquet de données selon l'importance est communiqué grâce à une signalisation à d'autres éléments de réseau impliqués dans la transmission, et que les éléments de réseau impliqués procèdent grâce à cette signalisation à une commande de ressources dynamique de la transmission,
**caractérisé en ce que** la commande des ressources a lieu par l'intermédiaire des caractéristiques d'une liaison logique par paquets, ce qu'on appelle un contexte PDP, et de l'identification de paquets de données individuels à l'intérieur de cette liaison par paquets, une adaptation dynamique de priorités relatives ayant lieu par l'intermédiaire de l'identification de paquets de données et chaque paquet d'informations étant soumis à un contrôle pour voir si une adaptation des paramètres de qualité devient nécessaire, en plus, pour la liaison logique, cette adaptation n'ayant lieu que si des paramètres de qualité absolus sont modifiés pour la liaison.

2. Procédé selon la revendication 1, **caractérisé en ce que** des règles pour le classement d'un paquet de données ou d'un flux de données selon son importance sont stockées dans un ensemble de règles (27) dans l'élément de réseau qui est compétent pour l'inspection.

3. Procédé selon la revendication 1 ou 2, **caractérisé en ce que** les règles pour mettre en application l'importance signalée d'un paquet de données ou d'un flux de données sont stockées dans les éléments de réseau impliqués, dans un ensemble de règles (28).

4. Procédé selon l'une des revendications 2 ou 3, **caractérisé en ce que** l'ensemble de règles (27 ; 28) est apte à être généré, pour l'inspection, la signalisation et la mise en application, par un exploitant de réseau.

5. Procédé selon la revendication 1, **caractérisé en ce que** l'identification est définie par une classification qui est effectuée dans un élément de réseau et qui est signalée par l'intermédiaire d'une identification à d'autres éléments de réseau impliqués.

6. Procédé selon la revendication 1, **caractérisé en ce que** l'identification est définie par une classification qui a lieu de manière autonome dans des éléments de réseau individuels ou dans chaque élément de réseau impliqué.

7. Procédé selon l'une des revendications 1 à 6, **caractérisé en ce que** lors de l'inspection du paquet de données, la catégorie de qualité de service de celui-ci, la catégorie QoS, est définie, et sur la base de la catégorie de qualité de service déterminée est réalisée une adaptation de la liaison logique entre un système radio et le terminal d'abonné à la catégorie de qualité de service.

8. Procédé selon l'une des revendications 1 à 6, **caractérisé en ce que** lors de l'inspection du paquet de données, la catégorie de qualité de service de celui-ci, la catégorie QoS, est définie, **en ce que** le début de fichier du paquet de données est écrasé avec la catégorie de qualité de service déterminée, et **en ce que** dans les éléments de réseau impliqués la catégorie de qualité de service inscrite est analysée et utilisée pour la commande du paquet de données.

9. Procédé selon l'une des revendications 1 à 6, **caractérisé en ce que** dans chaque élément de réseau impliqué la catégorie de qualité de service, classe QoS, du paquet de données est définie, et chaque élément de réseau utilise la catégorie de qualité de service déterminée pour commander le paquet de données lors de la transmission à un autre élément de réseau.

10. Système de télécommunication avec une commande améliorée de ressources dans des éléments de réseau (21, 22, 24) lors de la transmission de paquets de données (30, 40, 50) ou de flux de données entre les éléments de réseau et un terminal d'abonné (20) et inversement, avec un moyen d'inspection prévu dans au moins un élément de réseau (21, 22, 24) pour inspecter chaque paquet de données (30, 40, 50) entrant et pour classer le paquet de données selon son importance dans une catégorie de qualité de service, et des moyens pour signaler à d'autres éléments de réseau impliqués dans la transmission le classement du paquet de données selon son importance, et des moyens, dans les éléments de réseau impliqués, pour réaliser à l'aide de ce signalement une commande de ressources dynamique de la transmission, **caractérisé en ce que** les moyens dans les éléments de réseau impliqués sont conçus pour que la commande des ressources se fasse par l'intermédiaire des caractéristiques d'une liaison logique par paquets, ce qu'on appelle un contexte PDP, et par l'intermédiaire de l'identification de paquets de données individuels à l'intérieur de cette liaison par paquets, étant précisé qu'une adaptation dynamique de priorités relatives à lieu par l'intermédiaire de l'identification de paquets de données et que chaque paquet de données est soumis à un contrôle pour voir si une adaptation des paramètres de qualité devient nécessaire, en plus, pour la liaison logique, cette adaptation n'ayant lieu que si des paramètres de qualité absolus pour la liaison sont modifiés.
